(19) Europäisches Patentamt
European Patent Office
Office européen des brevets

(11) Veröffentlichungsnummer: **0 194 423**
**B1**

(12) # EUROPÄISCHE PATENTSCHRIFT

(45) Veröffentlichungstag der Patentschrift: **04.04.90**

(51) Int. Cl.⁴: **C08L 71/12**

(21) Anmeldenummer: **86100871.2**

(22) Anmeldetag: **23.01.86**

(54) **Thermoplastische Formmassen.**

(30) Priorität: **14.03.85 DE 3509092**

(43) Veröffentlichungstag der Anmeldung: **17.09.86 Patentblatt 86/38**

(45) Bekanntmachung des Hinweises auf die Patenterteilung: **04.04.90 Patentblatt 90/14**

(84) Benannte Vertragsstaaten: **AT BE CH DE FR GB IT LI NL SE**

(56) Entgegenhaltungen:
**EP-A- 0 048 391**
**EP-A- 0 099 062**
**DE-A- 3 300 232**

(73) Patentinhaber: **HÜLS AKTIENGESELLSCHAFT, Patentabteilung / PB 15 - Postfach 13 20, D-4370 Marl 1(DE)**

(72) Erfinder: **Bartmann, Martin, Dr., Burgstrasse 35, D-4350 Recklinghausen(DE)**
Erfinder: **Jadamus, Hans, Dr., Hervester Strasse 8, D-4370 Marl(DE)**

**EP 0 194 423 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen auf der Grundlage von einem Polyphenylenether, einem die Schlagzähigkeit verbessernden Kammpolymeren und ggf. weiteren Polymeren und Zusatzstoffen.

Polyphenylenether sind technische Hochleistungsthermoplaste mit hohen Viskositäten und Erweichungspunkten. Sie eignen sich für zahlreiche technische Anwendungen, bei denen es auf Beständigkeit bei hohen Temperaturen ankommt. Diese Polykondensate sind u. a. beschrieben in den US-PSS 3 306 874, 3 306 875, 3 257 357 und 3 257 358. Sie haben jedoch den Nachteil, daß sie spröde sind. Außerdem lassen sich die Polyphenylenether schlecht verarbeiten, da wegen der hohen Erweichungspunkte und Schmelzviskositäten hohe Temperaturen und hohe Scherkräfte aufgewendet werden müssen, was zu ihrer Schädigung führen kann.

Man hat deshalb versucht, durch Abmischungen mit anderen Polymeren die Verarbeitbarkeit der Polyphenylenether und die Schlagfestigkeit der Produkte zu verbessern.

Gemische von Polyphenylenethern mit einem schlagzähen Polystyrol, wie sie z. B. in der DE-AS 21 19 301 beschrieben sind, sind technisch wichtig, weil mit ihnen sowohl eine Verbesserung der Verarbeitbarkeit der Polyphenylenetherschmelze als auch eine Erhöhung der Schlagzähigkeit der aus den Gemischen hergestellten Formteile erzielt wird.

Eine gute Verarbeitbarkeit wird jedoch mit einer beträchtlichen Abnahme der Wärmeformbeständigkeit erkauft. Es hat sich darüber hinaus gezeigt, daß Formteile vielfach weder eine ausreichende Schlagzähigkeit noch eine hinreichend hohe Wärmeformbeständigkeit aufweisen.

Es ist vorgeschlagen worden, die Schlagzähigkeit durch Zugabe von elastomeren Blockmischpolymerisaten zu erhöhen. So werden z.B. in der DE-AS 1 932 234 und den DE-OSS 2 434 848, 2 713 509 und 2 750 515 Formmassen aus Styrolpolymerisaten, Polyphenylenethern und Zusätzen von unterschiedlich aufgebauten hydrierten und/oder nicht hydrierten Blockmischpolymeren beschrieben. Dabei bestehen die Blöcke vornehmlich aus polymerisierten vinylaromatischen Kohlenwasserstoffen und polymerisierten konjugierten Dienen.

In der DE-OS 3 226 427 werden Formmassen aus Styrolpolymerisaten, Polyphenylenethern und Zusätzen eines Blockmischpolymeren beschrieben, deren Blöcke aus Polyethylen, Poly(meth)acrylsäureestern, polymerisierten vinylaromatischen Kohlenwasserstoffen oder polymerisierten konjugierten Dienen bestehen.

Formmassen, die aus Polyphenylenether, Polystyrol und einem Polyphenylenether-Pfropfpolyolefin bestehen, sind darüber hinaus aus der DE-OS 3 300 232 bekannt. Das Polyphenylenether-Pfropfpolyolefin wird dadurch hergestellt, daß vorgebildeter Polyphenylenether zunächst auf aufwendige Weise mit einem Polyolefin gekoppelt wird, das reaktive Gruppen wie z.B. Glycidylgruppen enthält.

Bei allen diesen Mischungen führt der Zusatz der elastomeren Blockmischpolymerisate und Polyolefinharze zu einer Absenkung der Wärmeformbeständigkeit und zu einer nicht ausreichenden Erhöhung der Schlagzähigkeit. Darüber hinaus sind die genannten elastifizierenden Komponenten nur für Mischungen anwendbar, die gleichzeitig Polyphenylenether und Polystyrolharze enthalten.

Produkte, die diese Polyphenylenether-Polystyrolharz-Mischungen enthalten, haben aber eine relativ niedrige Wärmeformbeständigkeit. So weisen handelsübliche Mischungen von Polyphenylenethern mit einem schlagzähen Polystyrol im allgemeinen eine Wärmeformbeständigkeit von höchstens 150°C auf.

Aufgabe der vorliegenden Erfindung war es deshalb, thermoplastische Formmassen auf der Grundlage von Polyphenylenethern bereitzustellen, die zu Formteilen mit einer verbesserten Schlagzähigkeit unter weitgehendem Erhalt der Wärmeformbeständigkeit verarbeitet werden können.

Es wurden jetzt Formmassen gefunden, die diese Anforderungen erfüllen. Sie bestehen aus

(a) einem Polyphenylenether,
(b) einem Kammpolymer als Schlagzähkomponente und ggf.
(c) weiteren Polymeren und
(d) Zusatzstoffen,

dadurch gekennzeichnet, daß die Schlagzähkomponente (b) ein Kammpolymer ist, das einen Kohlenwasserstoff als Hauptkette und Polyphenylenether als Seitenketten enthält und wobei an die Hauptkette des Kammpolymeren Phenolgruppen der Formeln

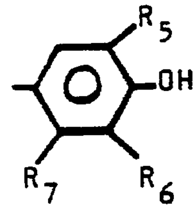

und/oder

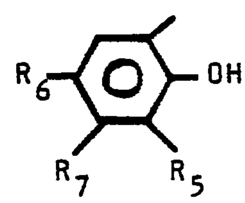

gebunden sind und an deren Sauerstoff Phenole der Formel

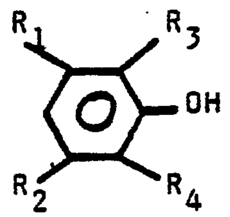

ankondensiert sind, wobei die Reste $R_1$ bis $R_7$ folgende Bedeutung haben:

$R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen oder $R_3$ und $R_4$ haben unabhängig voneinander jeweils die Bedeutung eines n-Alkylrestes mit bis zu 6 C-Atomen. Die Reste $R_5$, $R_6$ und $R_7$ bedeuten jeweils ein Halogen, einen Phenylrest oder einen n-Alkylrest mit bis zu 6 C-Atomen, vorzugsweise den Methylrest, wobei der Rest $R_7$ auch Wasserstoff sein kann.

Für den Polyphenylenether (a) kommen als Ausgangsverbindungen substituierte Phenole der allgemeinen Formel

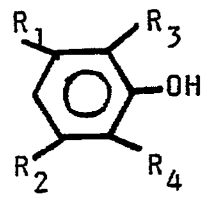

infrage, wobei $R_1$ bis $R_4$ die obengenannten Bedeutungen besitzen. Vorzugsweise wird 2,6-Dimethylphenol verwendet. Selbstverständlich können auch Gemische der hier aufgeführten monomeren Phenole eingesetzt werden. Ganz besonders bevorzugt werden Poly(2,6-dimethyl-1,4-phenylenether) mit einer Grenzviskosität zwischen 0,4 und 0,7 ml/g (gemessen in Chloroform bei 25°C analog zu DIN 53 728).

Die Schlagzähkomponente (b) ist ein Kammpolymer der allgemeinen Formel

$$A\,(B)_n$$

Dabei sind an die Hauptkette A, die aus einem Kohlenwasserstoff besteht, n Polyphenylenether-Seitenketten B gebunden. n ist eine ganze Zahl zwischen 2 und 70, vorzugsweise zwischen 5 und 30.

Die Hauptkette A besteht vorzugsweise aus einem Copolymer aus Ethylen, α-Olefin und Polyen (EPDM-Harz). Bevorzugte α-Olefine besitzen 3 bis 10 C-Atome. Bevorzugte Polyene sind Dicyclopentadien, Hexadien-(1,4) oder Ethylidennorbornen. Das Copolymer enthält vorzugsweise 1 bis 10 Mol-% Polyen. Das EPDM-Harz weist ein Molekulargewicht von 1000, insbesondere von 10 000 bis 1 000 000 auf. Bevorzugt liegt das Molekulargewicht zwischen 50 000 und 500 000.

Die Polyphenylenether-Seitenketten werden aus Phenolen der allgemeinen Formel

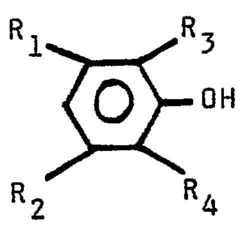

aufgebaut, wobei $R_1$ bis $R_4$ die obengenannten Bedeutungen besitzen. Vorzugsweise wird 2,6-Dimethylphenol verwendet.

Für die Anfangsglieder der Seitenketten werden Phenole der allgemeinen Formel

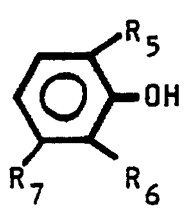
und/oder
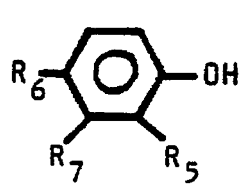

verwendet, in denen die Reste $R_5$, $R_6$ und $R_7$ jeweils ein Halogen, einen Phenylrest oder einen n-Alkylrest mit bis zu 6 C-Atomen, vorzugsweise den Methylrest, bedeuten und der Rest $R_7$ auch Wasserstoff sein kann.

Zur Herstellung der Kammpolymere geht man von einem ungesättigten Kohlenwasserstoffharz, wie z.B. einem Polyalkenylen oder einem EPDM-Harz, aus. Durch katalysierte Umsetzung mit Phenolen, wie sie z.B. in Angew. Makromol. Chem. 24, 205 (1972) und Angew. Makromol. Chem. 74, 17 (1978) beschrieben sind, wird ein freie phenolische Hydroxylgruppen aufweisender, modifizierter Kohlenwasserstoff hergestellt. In Gegenwart dieses Produktes wird anschließend ein für die Herstellung der Polyphenylenether-Seitengruppen B geeignetes Phenol durch oxidative Kupplung in Gegenwart eines Kupferaminkatalysators polymerisiert (vgl. deutsche Patentanmeldung P 3 509 093.6, "Kohlenwasserstoffharz-Polyphenylenether-Kammpolymere und deren Mischungen mit Polyphenylenethern sowie Verfahren zu ihrer Herstellung", Anmeldungstag 14.03.85). Man erhält auf diese Weise eine Mischung aus einem reinen Polyphenylenether und einem Kammpolymeren, aus der letzteres durch Ausfällung isoliert werden kann.

Die thermoplastischen Formmassen können noch weitere Polymere (c) enthalten. Vorzugsweise kommen dabei Polystyrolharze infrage, wobei es sich um unmodifizierte oder schlagzähmodifizierte Polystyrolharze handeln kann.

Weitere Zusatzstoffe (d) sind Pigmente, Farbstoffe, Füllstoffe, Flammschutzmittel, Antistatika, Antioxidantien und Schmiermittel.

Der Anteil der Schlagzähkomponente (b) beträgt, bezogen auf die Summe der Komponenten (a), (b) und (c), vorzugsweise 1 bis 50 Masse-%.

Das Verhältnis von Komponente (a) zu Komponente (c) kann in weiten Bereichen variieren. Um eine hohe Wärmeformbeständigkeit zu gewährleisten, sollte der Anteil der Komponente (c) jedoch nicht mehr als 50 Masse-%, bezogen auf die Komponente (a), betragen.

Die Herstellung der erfindungsgemäßen Formmassen kann in üblichen Vorrichtungen, die ein homogenes Mischen der reinen Komponenten zulassen, wie Knetern oder Extrudern, oder durch Lösen der Komponenten und Eindampfen der Lösungen erfolgen. Ein besonders geeignetes Verfahren wird in der DE-OS 33 37 629 beschrieben.

Die erfindungsgemäßen Formmassen weisen gegenüber solchen, die vergleichbare Anteile an schlagzähem Polystyrol oder unmodifiziertem EPDM-Harz enthalten, eine höhere Wärmeformbeständigkeit und Schlagfestigkeit auf.

Die Erfindung wird durch folgende Beispiele verdeutlicht:

Beispiel 1

Zu einer Mischung aus 2 kg EPDM-Harz (hergestellt aus 48 Masse-% Ethylen, 42 Masse-% Propylen und 10 Masse-% 5-Ethyliden-bicyclo-[2,2,1]-hept-2-en, Mooney-Viskosität (1 + 4) bei 100 °C = 45, $\overline{M}_w$ = 160 000) und 17,8 kg 2,6-Dimethylphenol wird bei 150 °C unter Stickstoff eine Lösung aus 50 g Methansulfonsäure, 200 g Xylol und 200 g 2,6-Dimethylphenol zugetropft.

Man läßt 4 Stunden reagieren und verdünnt nach Abkühlung auf 100 °C mit 50 kg Toluol. Die auf Raumtemperatur abgekühlte Lösung wäscht man mit Wasser neutral und trocknet danach über $Na_2SO_4$. Eine Probe der erhaltenen Lösung, die das modifizierte EPDM-Harz und 2,6-Dimethylphenol enthält, wird aufgearbeitet. Die Analyse ergibt, daß das modifizierte EPDM-Harz einen Gehalt von 1,5 Masse-% Phenol (nach IR und UV) aufweist.

Beispiel 2

In einem Rührkessel legt man eine Mischung aus 140 kg Toluol, 26 kg Methanol, 3,6 kg Morpholin und eine Lösung von 0,2 kg $CuCO_3$ in 0,7 kg Bromwasserstoffsäure (48 %ig) vor. Unter Rühren (250 U/min) und Einleiten eines Luftstroms von 8 $m^3$/h gibt man die in Beispiel 1 hergestellte Lösung von 2,6-Dimethylphenol und modifiziertem EPDM-Harz in Toluol über einen Zeitraum von 30 Minuten zu. 60 Minuten nach Beendigung der Zugabe wird die Polykondensation durch Stoppen mit wäßriger Essigsäure abgebrochen. Die Polymermischung wird durch Zugabe von Methanol aus der organischen Phase gefällt und anschließend filtriert und getrocknet.

Ausbeute = 19 kg
J = 75 ml/g

NMR-Spektren:
22 % H aromatisch σ = 6,5 (s)
68 % H Ar–$\underline{CH_3}$ σ = 2,1 (S)
7 % H Alk.–$\underline{CH_2}$–Alk. σ = 1,3 (m)
3 % H Alk.–$\underline{CH_3}$ σ = 0,9 (m)

Laut GPC-Analyse lag eine Mischung aus etwa 75 Masse-% reinem Poly(2,6-dimethyl-1,4-phenylenether) (PPE) und 25 Masse-% eines PPE-EPDM-Kammpolymeren vor.

$\overline{M}$w (PPE) = ca. 35 000
$\overline{M}$w (PPE/EPDM) = ca. 400 000

Die Polymermischung enthält 10 Masse-% EPDM-Harz.

Beispiele 3 und 4, Vergleichsbeispiele A bis C

Mit Hilfe eines Zweiwellenextruders werden unter Zusatz von 0,5 Maser-% Didecylphenyl-phosphit (Handelsprodukt: IRGASTAB^R CH 300 von Ciba-Geigy), 0,5 Masse-% 3-(3,5-di-tert.-butyl-4-hydroxyphenyl)-propionsäureoctadecylester (Handelsprodukt: IRGANOX^R 1076 von Ciba-Geigy) und 1,5 Masse-% oxidiertem Polyethylenwachs mit einem Molekulargewicht von 1 500 (Handelsprodukt: VESTOWAX^R AO 1539, Hersteller: Hüls AG) Polymermischungen hergestellt.

Die Zylindertemperatur beträgt dabei 280 bis 300 °C, in Beispiel 4 jedoch nur 230 °C.

Bei Beispiel 2 geht man gemäß Beispiel 2 von einem PPE/EPDM-PPE-Gemisch mit 10 % EPDM-Harz aus und setzt schlagzähes Polystyrol zu.

Bei Beispiel 4 wird analog zu Beispiel 2 ein PPE/EPDM-PPE-Gemisch mit einem Anteil von 20 % EPDM-Harz hergestellt und dann unmodifiziertes Polystyrol zugemischt.

Die Vergleichsbeispiele A bis C enthalten Polymermischungen ohne EPDM-PPE-Kammpolymer.

Für die Beispiele 3, B und C wurde als schlagzähes Polystyrol VESTYRON^R 616, für Beispiel 4 als unmodifiziertes Polystyrol VESTYRON^R 114 eingesetzt. Hersteller: Hüls AG. Die Kenndaten dieser Produkte sind der Broschüre "Kunststoffe von hüls", VESTYRON^R, Ausgabe September 1983, zu entnehmen.

Die Eigenschaften der Polymermischungen wurden an Prüfkörpern ermittelt, die mit Hilfe einer Spritzgußmaschine bei 260 °C hergestellt worden waren.

Tabelle 1

| Beisp. | PPE [Masse-%] | EPDM-PPE (40 / 60) [Masse-%] | schlagzähes Polystyrol [Masse-%] | EPDM [Masse-%] | Vicat-Temp.* [°C] | Kerbschlagzähigkeit** (kJ/m²) |
|---|---|---|---|---|---|---|
| 2 | 75 | 25 (10, 15) | - | - | 205 | 26 |
| 3 | 45 | 15 ( 6, 9) | 40 | - | 156 | 13 |
| 4 | 30 | 30 (12, 18) | 40 | - | 141 | 20 |
| A | 90 | - | - | 10 | 193 | 19 |
| B | 60 | - | 40 | - | 157 | 11 |
| C | 54 | - | 40 | 6 | 150 | 6 |

* Vicat-Temperatur VST/A/50 °C nach DIN 53 460
** DIN 53 457

Beispiel 4 zeigt, daß auch mit unmodifiziertem Polystyrol ein Produkt mit hoher Schlagfestigkeit erhalten wird.

## Patentansprüche

1. Thermoplastische Formmassen aus
(a) einem Polyphenylenether,
(b) einer polystyrolfreien Schlagzähkomponente und ggf.
(c) weiteren Polymeren und
(d) Zusatzstoffen,
dadurch gekennzeichnet, daß die Schlagzähkomponente (b) ein Kammpolymer ist, das einen Kohlenwasserstoff als Hauptkette und Polyphenylenether als Seitenketten enthält und wobei an die Hauptkette des Kammpolymeren Phenolgruppen der Formeln

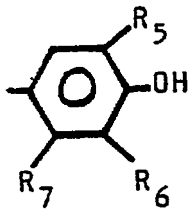 und/oder 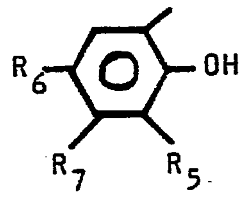

gebunden sind und an deren Sauerstoff Phenole der Formel

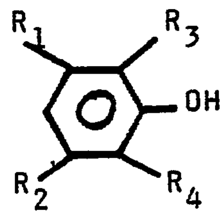

ankondensiert sind, wobei die Reste $R_1$ bis $R_7$ folgende Bedeutung haben:

$R_1$ und $R_2$ bedeuten unabhängig voneinander einen Methylrest oder vorzugsweise Wasserstoff. Entweder steht $R_3$ für Wasserstoff und $R_4$ für einen tertiären Alkylrest mit bis zu 6 C-Atomen oder $R_3$ und $R_4$ haben unabhängig voneinander jeweils die Bedeutung eines n-Alkylrestes mit bis zu 6 C-Atomen. Die Reste $R_5$, $R_6$ und $R_7$ bedeuten jeweils ein Halogen, einen Phenylrest oder einen n-Alkylrest mit bis zu 6 C-Atomen, vorzugsweise den Methylrest, wobei der Rest $R_7$ auch Wasserstoff sein kann.

2. Thermoplastische Formmassen nach Anspruch 1, dadurch gekennzeichnet, daß die Seitenketten des Kammpolymeren aus Poly(2,6-dimethyl-1,4-phenylenether) aufgebaut sind.

3. Thermoplastische Formmassen nach den Ansprüchen 1 bis 2, dadurch gekennzeichnet, daß die Hauptkette des Kammpolymeren von einem EPDM-Harz abgeleitet ist.

4. Thermoplastische Formmassen nach den Ansprüchen 1 bis 3, dadurch gekennzeichnet, daß im Durchschnitt pro Molekül an der Hauptkette des Kammpolymeren 2 bis 70, vorzugsweise 5 bis 30 Polyphenylenether-Seitenketten stehen.

5. Thermoplastische Formmassen nach den Ansprüchen 1 bis 4, dadurch gekennzeichnet, daß der Anteil der Schlagzähkomponente (b), bezogen auf die Summe der Komponenten (a), (b) und (c), 1 bis 50 Masse-% beträgt.

**Claims**

1. A thermoplastic moulding composition composed of
(a) a polyphenylene ether,
(b) an impact modifier free from polystyrene and, if desired,
(c) further polymers and
(d) additives,

characterized in that the impact modifier (b) is a comb polymer which contains a hydrocarbon as main chain and polyphenylene ethers as side chains and in which phenol groups of the formulae

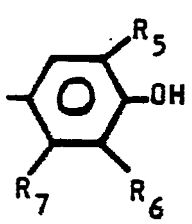 and/or 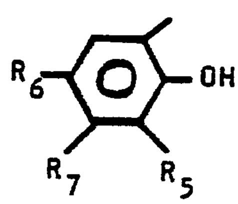

are bonded to the main chain of the comb polymer and phenols of the formula

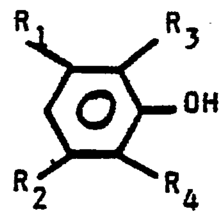

are condensed thereto via the oxygen thereof, the radicals $R_1$ to $R_7$ having the following meanings:

$R_1$ and $R_2$ independently of one another denote a methyl radical or preferably hydrogen, either $R_3$ represents hydrogen and $R_4$ represents a tertiary alkyl radical having up to 6 C atoms, or $R_3$ and $R_4$ independently of one another each denote a n-alkyl radical having up to 6 C atoms, the radicals $R_5$, $R_6$ and $R_7$ denote in each case a halogen, a phenyl radical or a n-alkyl radical having up to 6 C atoms, preferably the methyl radical, and the radical $R_7$ may also be hydrogen.

2. A thermoplastic moulding composition according to claim 1, characterized in that the side chains of the comb polymer are formed from poly(2,6-dimethyl-1,4-phenylene ether).

3. A thermoplastic moulding composition according to either of claims 1 to 2, characterized in that the main chain of the comb polymer is derived from an EPDM resin.

4. A thermoplastic moulding composition according to any of claims 1 to 3, characterized in that on average, per molecule, 2 to 70, preferably 5 to 30, polyphenylene ether side chains are attached to the main chain of the comb polymer.

5. A thermoplastic moulding composition according to any of claims 1 to 4, characterized in that the proportion of the impact modifier (b), relative to the sum of the components (a), (b) and (c), is 1 to 50% by mass.

**Revendications**

1. Masses à mouler thermoplastiques constituées
(a) par un éther polyphénylénique,
(b) par un composé résistant au choc, exempt de polystyrène, et éventuellement,
(c) par d'autres polymères, et
(d) par des additifs,
caractérisées par le fait que le composant (b) résistant au choc est un polymère en peigne qui contient un hydrocarbure comme chaîne principale et des éthers polyphényléniques comme chaînes latérales, et des groupes phénol des formules

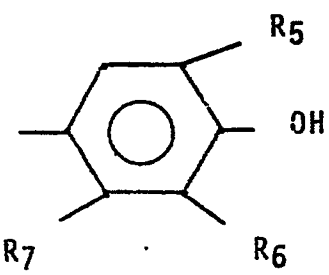

et/ou

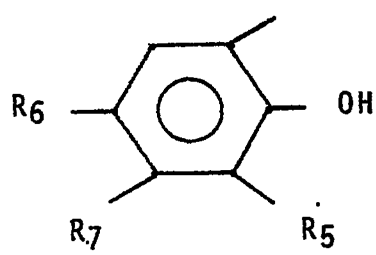

étant liés à la chaîne principale du polymère en peigne et des phénols de formule

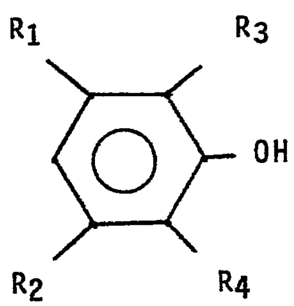

étant condensés sur leur oxygène, les radicaux $R_1$ à $R_7$ ayant la signification suivante:

$R_1$ et $R_2$ représentent, indépendamment l'un de l'autre, un radical méthyle ou, de préférence, de l'hydrogène.

$R_3$ représente de l'hydrogène et $R_4$ un radical alkyle tertiaire comportant jusqu'à 6 atomes de carbone, ou bien $R_3$ et $R_4$ représentent chacun, indépendamment l'un de l'autre, un radical n-alkyle comportant jusqu'à 6 atomes de carbone. Les radicaux $R_5$, $R_6$ et $R_7$ représentent respectivement un halogène, un radical phényle ou un radical n-alkyle comportant jusqu'à 6 atomes de carbone, de préférence le radical méthyle, le radical $R_7$ pouvant également représenter de l'hydrogène.

2. Masses à mouler thermoplastiques selon la revendication 1, caractérisées par le fait que les chaînes latérales du polymère en peigne sont édifiées à partir de poly-éthers 2,6-diméthyl-1,4-phényléniques.

3. Masses à mouler thermoplastiques selon les revendications 1 à 2, caractérisées par le fait que la chaîne principale du polymère en peigne est dérivée d'une résine EPDM.

4. Masses à mouler thermoplastiques selon les revendications 1 à 3, caractérisées par le fait qu'en moyenne de 2 à 70, de préférence de 5 à 30 chaînes latérales d'éthers polyphényléniques par molécule sont situées sur la chaîne principale du polymère en peigne.

5. Masses à mouler thermoplastiques selon les revendications 1 à 4, caractérisées par le fait que la fraction du composant (b) résistant au choc est de l'ordre de 1 à 50% en masse, relativement à la somme des composants (a), (b) et (c).